# EUROPEAN PATENT SPECIFICATION

(11) **EP 0 521 041 B1**
(45) Date of publication and mention of the grant of the patent: **12.07.1995**
(21) Application number: 91906218.2
(22) Date of filing: 15.03.1991
(51) Int. Cl.: F16L 55/165

(54) **PIPELINE AND PASSAGEWAY LINING MATERIALS**
BESCHICHTUNGSMATERIALIEN FÜR PIPELINES UND KANALISATION
MATERIAUX DE GARNISSAGE DE PIPELINES ET DE PASSAGES

(30) Priority: 19.03.1990 GB 9006154
(43) Date of publication of application: 07.01.1993
(73) Proprietor: INA Acquisition Corporation, Memphis, TN 38138 (US)
(72) Inventor: SMITH, Edward, Peter, 10 Church Gardens, Northants NN6 8EY (GB)
(74) Representative: Denmark, James
(86) International application number: GB9100402
(87) International publication number: WO9114896

(56) References cited:
- EP-A- 0 205 621
- EP-A- 0 228 998
- FR-A- 2 574 898

## Description

This invention relates to lining material for the lining of pipelines and passageways, and such materials are constructed in accordance with the invention in a fashion which enables the lining materials in fact to be used to produce pipes which can be employed in general utilisation, as opposed to being used for the lining of pipelines and passageways.

The lining processes which are known for the lining of pipelines and passageways comprise the utilisation of a flexible lining tube which includes at least one resin absorbent layer. That resin absorbent layer is impregnated with a curable synthetic resin, and the tube whilst impregnated but whilst still flexible is then shaped to the pipeline or passageway surface using fluid pressure. Whilst the pressure is still applied, the resin is caused or allowed to cure forming a hard and rigid lining pipe on the pipeline or passageway surface. These lining processes are known as soft-lining processes.

By way of illustration of background prior art, reference is made to European Patent Applications Nos. 205621 and 228998 as well as French Patent Specification No. 2574898.

The lining tube may simply be pulled into the pipeline or passageway and then inflated using fluid pressure, or alternatively the lining may be everted into and along the pipeline or passageway again using fluid pressure. The present invention applies to either method, but has best utility in the case where the lining tube is simply pulled into the pipeline or passageway. Also, the present invention applies where the lining tube is simply inflated in free space so as it takes up the form of a circular sectioned tube, and when the resin cures a free-standing and usable pipe is produced.

The known lining tubes comprise essentially one or more layers of a fibrous felt to absorb the resin, and to the outside of the lining tube there may be an impermeable film to retain the resin inside the tube. The impermeable layer may be a coating bonded to the outermost layer of felt.

There is a demand for providing these lining tubes with reinforcement in order to provide greater hoop strength in the finished rigid lining or pipe, and the present invention is concerned with the provision of such reinforcement which is in accordance with the invention in the form of one or more reinforcement webs of woven fibrous material wrapped around the inner layer or inner layers of resin absorbent material, said reinforcement web(s) being simply wrapped and overlapped around the inner absorbent layer or layers, so that as the lining tube is inflated to size, the overlapped edges of the reinforcing layer or layers will slip relative to each other to enable said reinforcing web(s) to expand.

Preferably the overlapped edges of the web or webs of woven fibrous material are adhered by means of ar adhesive substance such as a hot melt adhesive which loses its adhesion when the lining tube is impregnated with the resin or when the tube is heated.

It will be seen therefore that in the preferred case the reinforcing tubular webs are temporarily held in tubular form by the adhesive but can expand due to loss of adhesion during the inflation process.

Preferably, there will be two or three of said reinforcing webs which may be of synthetic fibres or glass fibres or the like, and the overlap positions of the respective layers will be angularly offset, for example by 90 degrees relative to each other in order to ensure that the overlap portions do not create an excessively thick region in the lining tube.

In one embodiment of the invention, the tube comprises an inner layer of fibrous felt which is a sheet formed into tubular form with the free edges in butting contact, said edges being connected to each other by sewing extending across the butted edges. Around the absorbent layer is then placed a reinforcement web and in the preferred case the adhesive or other temporary connection means applied to hold the fibrous web in position. Second and third layers of reinforcement web may be applied. Finally, to the outside of the reinforcement web or webs may be applied a film of impermeable material or another felt with an outer impermeable coating.

When the interior of such a lining tube is impregnated with synthetic resin, the adhesive or other bond when provided between the overlapped edges of the reinforcement webs is lost, and when the lining is expanded to circular form, for example by everting a film tube into the centre of the lining tube, the reinforcement webs slip to the degree as necessary, but become embedded in the synthetic resin and the resulting inflated tube throughout its thickness becomes a homogeneous mass of resin with the reinforcement webs embedded therein and when the resin cures, a reinforced tubular structure results.

Typically the lining tube may be inflated after it has been impregnated and then placed inside the pipeline or passageway to be lined.

In one embodiment, the pipeline or passageway is slightly shorter than the length of the tube, so that the tube ends protrude from the pipeline or passageway and around such ends are placed formers in order to taper the ends of the rigid lining when the resin has cured thereby enabling the placement on said ends of flange couplings which may be moulded components moulded from a similar synthetic resin so that the flange couplings can be adhered to the ends of the rigid lining tube to provide a means for connecting the rigid lining tube to for example another coupling or a similar tube.

An embodiment of the present invention will now be described, by way of example, with reference to the accompanying diagrammatic drawings wherein;-
Figs. 1, 2, 3 illustrate diagramatically a process for the lining of an underground sewer;
Fig. 4 is a cutaway perspective view of the lining tube which is used in the process of Fig. 1, and which is constructed according to an embodiment of the invention;-
Fig. 5 is a diagrammatic elevation of the end of the lining tube and a flange for fitting thereto; and
Fig. 6 is a sectional elevation of the flange and lining tube end when fitted together in conjunction with a steel flange.

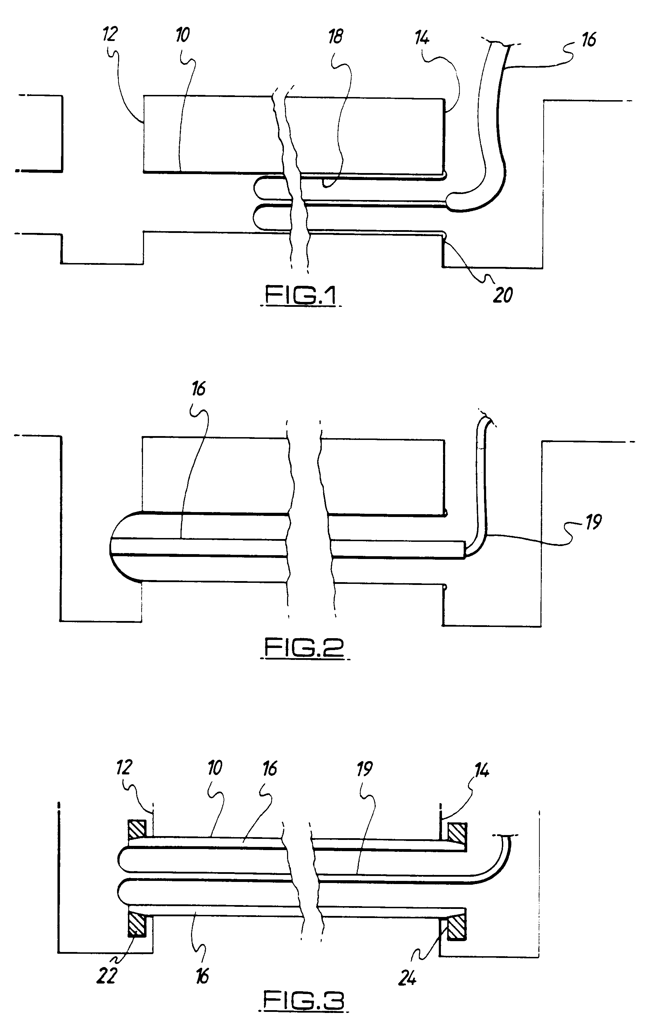

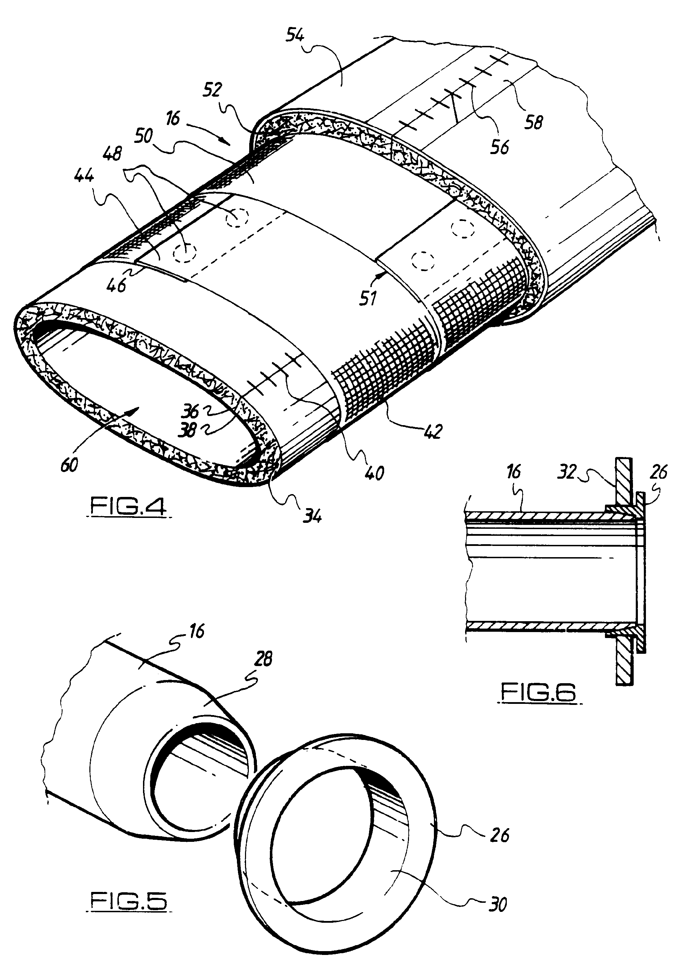

Referring to the drawings in Figs. 1 to 3, an underground sewer pipe (10) is to be lined between a pair of manholes (12) and (14). The sewer (10) is lined using a lining tube (16) which is pulled into the pipe (10) as shown diagrammatically in Fig. 1 using a pre-lining flexible plastic tube (18) which is anchored at position (20) at the right hand end of the sewer and then is everted using fluid pressure, e.g. air or water, into the sewer (10) so as to pull the lining tube (16) into the position shown in Fig. 2. When the tube (16) is in position as shown in Fig. 2 a second flexible plastic tube (19) connected to the trailing end of the tube (16) is everted into the tube (16) as shown in Fig. 3 to inflate the tube (16) against the surface of the sewer (10). The tube (16) is of a material which absorbs a curable synthetic resin, and such material is in fact impregnated with the synthetic resin. The synthetic resin is caused or allowed to cure when the tube is in the position shown in Fig. 3 so that when the resin cures, the resulting liner (16) becomes a hard lining pipe which is free-standing and lines the sewer surface.

The eversion of the second tube (19) into the tube (16) is also by means of fluid pressure such as air or water pressure.

As the lining (16) cures, the ends which project into the manholes (12) and (14) are formed so as to be tapered on the outside as shown by means of formers (22) and (24) which may be metal rings.

A formed rigid end of the tube (16) is shown in Fig. 5 and shown in conjunction therewith is a flange (26) which is adapted to be fitted to the tapered end (28) of the rigid tube (16). The inner surface (30) of the flange ring (26) may also be tapered as shown in Fig. 6 so that the flange can be securely fixed to the tapered end (28). The fixing may be by means of adhesive or simply by the bonding of the tube (16) to the flange (26) in that the flange (26) preferably is formed of the same synthetic resinous material. As shown in Fig. 6, the flange (30) is bonded to the rigid tube (16) and a coupling ring or plate (32) preferably of steel is mounted around the flange so as to serve as a means of coupling the pipe end to for example another pipe end or an appropriate coupling.

The construction of the lining tube (16) is shown in Fig. 4 and it will be seen to comprise an inner tube (34) which is a sheet formed into tubular form so that the butting edges (36) and (38) come together and they are connected by means of sewing stitches (40).

Around the tube (34) is a reinforcement tube (42) which is formed by wrapping a web of woven reinforcing material around the inner tube (34) until the edges (44) and (46) overlap. The tube (42) is of a fibrous material, the fibres being synthetic fibres and/or glass fibres to give hoop strength to the resulting rigid pipe (16). Where the edges (44) and (46) overlap they may be temporarily connected as indicated by reference (48) by for example hot melt adhesive or other neans which will be released when the tube is impregnated with the synthetic resin.

A further reinforcing tube (50) which is identical to tube (42) is applied around tube (42) except that the overlap (51) is angularly displaced relative to the overlap (44), (46).

Finally, around the tube (50) is applied an outer felt tube (52) which is similar to tube (34) except that it is provided with an outer impermeable coating (54). Where the butting edges are connected by sewing (56) there is applied a tape (58) to seal the stitches to prevent escape of the resin.

The tube (16) is impregnated with resin by pumping same into the interior of the tube as indicated by arrow (60), and by pressing the tube by means of nip rollers in order to ensure even distribution of the resin throughout the layers (34), (42), (50) and (52). As the resin impregnates these layers, so the adhesions spots, when provided (48) are released and the tubes (42) and (50) are in fact free to expand under the inflation pressure when the tube (16) is inflated to the condition shown in Fig. 3.

Although the reinforcing tubes (42) and (50) are described as being of woven construction for strength, they could be of another textile material configuration.

It will be appreciated that the overlapped webs are dimensioned preferably so that the overlap is not completely lost as the tube expands. The fact that there is no positive connection between the overlapped layers does not affect the linings final strength as the reinforcement webs become embedded in the hard, cured resin.

## Claims

1. A lining tube comprising an inner resin absorbent layer or layers (34) and one or more reinforcement webs (42, 50) of woven fibrous material wrapped around the inner layer or inner layers (34) of resin absorbent material to provide reinforcement, characterised in that said reinforcement web or webs (42, 50) is or are wrapped around the inner resin absorbent layer or layers and the meeting edges (44, 46) of the or each said reinforcement web (42, 50) overlap.

2. A lining tube according to Claim 1, characterised in that the overlapped edges of the reinforcement web or webs (42, 50) are adhered by means of an adhesive substance (48) such as a hot melt adhesive which loses its adhesion when the lining tube (16) is impregnated with resin or when the tube is heated.

3. A lining tube according to Claim 1 or 2, characterised in that there are two or three of said reinforcement webs (42, 50) and the overlapped positions of the respective reinforcement webs are angularly offset, for example by 90 degrees relative to each other in order to ensure that the overlapped portions (44, 46) do not create an excessively thick region in the lining tube (16).

4. A lining tube according to any preceding claim characterised in that the tube (16) comprises a single inner layer (34) of fibrous felt which is a sheet formed into tubular form with the free edges (36, 38) in butting contact, said edges (36, 38) being connected to each other by sewing (40) extending across the butted edges (36, 38).

5. A lining tube according to any preceding claim characterised in that to the outside of the reinforcement web or webs is applied a film (54) of impermeable material or another felt with an outer impermeable coating (54).

6. A lining tube according to any preceding claim, characterised in that the resin absorbent layer or layers (34) and the or each of the reinforcement webs (42, 50) is impregnated with synthetic resin.

7. A method of lining a pipeline or passageway comprising using a lining tube according to claim 6 wherein the lining tube is held against the pipeline or passageway surface by means of fluid pressure, and the resin is cured or caused to cure so that the lining tube and resin form a hard rigid lining pipe, characterised in that when the fluid pressure is applied the overlapped edges of the web or webs slip relative to each other.

8. A method according to claim 7 wherein the pipeline or passageway is slightly shorter than the length of the tube, so that the tube ends protrude from the pipeline or passageway and around such ends are placed formers in order to taper the ends of the rigid lining pipe when the said resin has cured, thereby enabling the placement on said ends of flange couplings.

9. A method according to claim 8 wherein said flange couplings are moulded components moulded from a synthetic resin which is similar to that used for the lining pipe so that the flange couplings can be adhered to the ends of the lining pipe to provide a means for connecting the lining pipe to for example another coupling or a similar tube.

## Patentansprüche

1. Auskleidungsschlauch mit einer inneren, harzabsorbierenden Schicht oder Schichten (34) und mit einem oder mehreren Verstärkunsgewebe(n) (42, 50) aus gewobenem Fasermaterial, welches um die innere(n) Schicht(en) (34) aus harzabsorbierendem Material gewickelt ist, um eine Verstärkung zu erzielen, **dadurch gekennzeichnet,** daß das bzw. die Verstärkungsgewebe (42, 50) um die innere(n) absorbierende(n) Schicht(en) gewickelt ist bzw. sind und daß die aufeinander stoßenden Kanten (44, 46) des oder jedes Verstärkungsgewebes (42, 50) sich überlappen.

2. Auskleidungsschlauch nach Anspruch 1, **dadurch gekennzeichnet,** daß die sich überlappenden Kanten des bzw. der Verstärkungsgewebe(s) (42, 50) mittels eines Klebstoffes (48) wie beispielsweise eines heißen Schmelzklebers verklebt sind, welcher seine Klebewirkung verliert, wenn der Auskleidungsschlauch (16) mit Harz imprägniert wird oder wenn der Auskleidungsschlauch gehitzt wird.

3. Auskleidungsschlauch nach Anspruch 1 oder 2, **dadurch gekennzeichnet,** daß zwei oder drei Verstärkungsgewebe (42, 50) vorgesehen sind und daß die Überlappungspositionen der betreffenden Verstärkungsgewebe im Winkel zueinander versetzt sind, beispielsweise um 90° zueinander, um zu gewährleisten, daß die Überlappungsabschnitte (44, 46) zu keinem übermäßig dicken Bereich in dem Auskleidungsschlauch (16) führen.

4. Auskleidungsschlauch nach einem der vorhergehenden Ansprüche, **dadurch gekennzeichnet,** daß der Auskleidungsschlauch (16) eine einzige ilmere Schicht (34) aus faserigem Filz aufweist, welcher eine Schicht ist, die zu einem Schlauch geformt ist, wobei die freien Kanten (36, 38) stumpf aneinander stoßen, und daß die Kanten (36, 38) miteinander durch eine Naht (40) verbunden sind, welche quer über die stumpf aneinander stoßenden Kanten (36, 38) verläuft.

5. Auskleidungsschlauch nach einem der vorhergehenden Ansprüche, **dadurch gekennzeichnet,** daß auf der Außenseite des bzw. der Verstärkungsgewebe(s) eine Dünnschicht (54) aus einem undurchlässigen Material oder eine weitere Filzschicht mit einer äußeren, undurchlässigen Deckschicht (54) aufgebracht ist.

6. Auskleidungsschlauch nach einem der vorhergehenden Ansprüche, **dadurch** **gekennzeichnet,** daß die harzabsorbierende(n) Schicht(en) (34) und das bzw. jedes Verstärkungsgewebe (42, 50) mit Kunstharz getränkt ist.

7. Verfahren zum Auskleiden einer Rohrleitung oder eines Kanals, bei dem ein Auskleidungsschlauch nach Anspruch 6 verwendet wird, wobei der Auskleidungsschlauch mittels Flüssigkeitsdruck gegen die Oberfläche der Rohrleitung oder des Kanals gehalten wird und wobei das Harz ausgehärtet wird oder zum Aushärten veranlaßt wird, so daß der Auskleidungsschlauch und das Harz ein hartes, festes Auskleidungsrohr bilden, **dadurch gekennzeichnet**, daß bei Anlegen des Flüssigkeitsdrucks die sich überlappenden Kanten des bzw. der Verstärkungsgewebe(s) relativ zueinander gleiten.

8. Verfahren nach Anspruch 7, **dadurch gekennzeichnet,** daß die Rohrleitung oder der Kanal geringfügig kürzer ist als die Länge des Schlauchs, so daß die Schlauchenden aus der Rohrleitung oder dem Kanal herausragen, daß um die Schlauchenden Formwerkzeuge gelegt werden, um die Enden des festen Auskleidungsrohrs nach erfolgtem Aushärten des Harzes abzuphasen und dadurch die Anbringung von Flanschkupplungen auf den Enden zu ermöglichen.

9. Verfahren nach Anspruch 8, **dadurch gekennzeichnet,** daß die Flanschkupplungen Gußteile sind, welche aus einem Kunstharz gegossen sind, welches dem für das Auskleidungsrohr verwendeten Kunstharz ähnlich ist, so daß die Flanschkupplungen mit den Enden des Auskleidungsrohrs verklebt werden können, um ein Mittel zum Verbinden des Auskleidungsrohrs mit beispielsweise einer anderen Kupplung oder einem ähnlichen Rohr zu schaffen.

## Revendications

1. Tube de chemisage comprenant une ou des couches internes (34) absorbant de la résine et une ou plusieurs nappes de renforcement (42, 50) en matière fibreuse tissée enroulées autour de la ou des couches internes (34) en matière absorbant la résine pour obtenir un renforcement, caractérisé en ce que ladite ou lesdites nappes de renforcement (42, 50) est ou sont enroulées autour de la ou les couches internes absorbant la résine et en ce que les bords de rencontre (44, 46) de la ou de chaque nappe de renforcement (42, 50) se recouvrent.

2. Tube de chemisage suivant la revendication 1, caractérisé en ce que les bords de la ou les nappes de renforcement (42, 50) qui se recouvrent sont collés au moyen d'une substance adhésive (48), telle qu'un adhésif fondu chaud qui perd sa qualité adhésive quand le tube de chemisage (16) est imprégné avec de la résine ou quand le tube est chauffé.

3. Tube de chemisage suivant la revendication 1 ou 2, caractérisé en ce qu'il y a deux ou trois desdites nappes de renforcement (42, 50) et en ce que les positions de recouvrement des nappes de renforcement respectives sont décalées angulairement, par exemple de 90° l'une par rapport à l'autre, afin d'être sûr que les parties de recouvrement (44, 46) ne créent pas une région d'épaisseur excessive dans le tube de chemisage (16).

4. Tube de chemisage suivant l'une des revendications précédentes, caractérisé en ce que le tube (16) comprend une seule couche interne (34) en feutre fibreux qui est une couche mise en forme tubulaire avec ses bords libres (36, 38) en contact bout à bout, lesdits bords (36, 38) étant reliés l'un à l'autre par couture (40) passant sur les bords (36, 38) placés bout à bout.

5. Tube de chemisage suivant l'une des revendications précédentes, caractérisé en ce qu'à l'extérieur de la nappe ou des nappes de renforcement, est appliqué un film (54) en une matière imperméable ou en un autre feutre muni d'un revêtement externe imperméable (54).

6. Tube de chemisage suivant l'une des revendications précédentes, caractérisé en ce que la ou les couches (34) absorbant de la résine et la ou chacune des nappes de renforcement (42, 50) sont imprégnées de résine synthétique.

7. Méthode de chemisage d'un pipeline ou d'un passage comprenant l'utilisation d'un tube de chemisage suivant la revendication 6, dans laquelle le tube de chemisage est maintenu contre la surface du pipeline ou du passage au moyen de la pression d'un fluide et la résine est durcie ou est forcée de durcir de façon que le tube de chemisage et la résine forment un tuyau de chemisage rigide et dur, caractérisée en ce que, quand la pression du fluide est appliquée, les bords de la ou des nappes, qui se recouvrent, glissent l'un par rapport à l'autre.

8. Méthode suivant la revendication 7 dans laquelle le pipeline ou le passage est légèrement plus court que la longueur du tube de façon que les extrémité du tube sortent du pipeline ou du passage et qu'autour de ces extrémités, soient placés des gabarits afin de réduire les extrémités du tuyau de chemisage rigide quand ladite résine a durci, permettant ainsi de placer sur lesdites extrémités des brides d'accouplement.

9. Méthode suivant la revendication 8, dans laquelle lesdites brides d'accouplement sont des composants moulés en résine synthétique qui est semblable à celle qui est utilisée pour le tuyau de chemisage de façon que les brides puissent adhérer aux extrémités du tuyau de chemisage pour obtenir un moyen de connexion du tuyau de chemisage, par exemple, à une autre bride ou à un tube semblable.
